(19) Europäisches Patentamt / European Patent Office / Office européen des brevets

(11) **EP 3 675 982 B1**

(12) **EUROPEAN PATENT SPECIFICATION**

(45) Date of publication and mention of the grant of the patent:
**22.07.2026 Bulletin 2026/30**

(21) Application number: **18852629.7**

(22) Date of filing: **30.08.2018**

(51) International Patent Classification (IPC):
$B01D\ 39/06^{(2006.01)}$      $B01D\ 37/02^{(2006.01)}$
$B01J\ 8/34^{(2006.01)}$      $B01J\ 20/10^{(2006.01)}$

(52) Cooperative Patent Classification (CPC):
**B01D 37/02; B01D 39/06; B01J 20/106; B01J 20/28004; B01J 20/28011; B01J 20/2803; B01J 20/28033; B01J 20/28042; B01J 20/28059; B01J 20/3021; B01J 20/3078;** B01D 2239/1241; B01D 2239/1258; B01J 2220/42

(86) International application number:
**PCT/US2018/048664**

(87) International publication number:
**WO 2019/046499 (07.03.2019 Gazette 2019/10)**

(54) **METHOD OF MAKING HIGH DENSITY PERLITE FILTER AID**

VERFAHREN ZUR HERSTELLUNG VON PERLITFILTERHILFE MIT HOHER DICHTE

PROCÉDÉ DE PRÉPARATION D'ADJUVANT DE FILTRATION À BASE DE PERLITE HAUTE DENSITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.08.2017 US 201762552870 P**

(43) Date of publication of application:
**08.07.2020 Bulletin 2020/28**

(73) Proprietor: **Imerys USA, Inc.**
**Roswell, GA 30076 (US)**

(72) Inventor: **ROULSTON, John**
**Reno, Nevada 89523 (US)**

(74) Representative: **Haseltine Lake Kempner LLP**
**One Portwall Square**
**Portwall Lane**
**Bristol BS1 6BH (GB)**

(56) References cited:
| | |
|---|---|
| EP-A1- 0 790 070 | EP-A1- 2 444 460 |
| WO-A1-2015/100050 | CH-A- 472 234 |
| CN-A- 1 097 350 | CN-A- 1 232 004 |
| US-A- 2 501 962 | US-A1- 2003 194 356 |
| US-A1- 2004 099 184 | US-A1- 2009 261 041 |
| US-A1- 2014 346 112 | US-A1- 2016 355 764 |

EP 3 675 982 B1

**Description**

**CLAIM FOR PRIORITY**

This PCT International Application claims the benefit of priority of U.S. Provisional Application No. 62/552,870, filed August 31, 2017.

**TECHNICAL FIELD**

Embodiments of the present disclosure relate generally to filter aids comprising perlite and methods of making and use thereof.

**BACKGROUND**

In many filtration applications, a filtration device may include a filer aid. The filter aid may include one or more filtration components, which, for example, may be inorganic powders or organic fibrous materials. Such a filter aid may be used in combination with a filter element to enhance filtration performance.

In the field of fluid filtration, glassy minerals such as perlite or pumice may be employed as filter aids. Yet, such mineral products often suffer from attributes that make them inappropriate for filtration use, cause them to be less desirable, or cause them to have poor or improvable performance in filtering applications. For example, known glassy minerals products may be fragile or have low permeability. Thus, it may be desirable to improve glassy minerals products such that they exhibit more desirable performance in a filtration applications, such as high permeability and high density. EP0790070A1 discloses methods for preparing composite filtration media. CH472234A discloses a process for producing perlite filter aids. WO2015/100050A1 discloses methods for making co-agglomerated composite materials. US2501962A discloses methods and apparatus for expanding rock or earthy materials having a heat expansive component therein.

**SUMMARY OF THE DISCLOSURE**

The present disclosure includes filter aids, methods for making filter aids, and methods for filtering liquids. The present invention is a method for making a filter aid comprising: heating a perlite source material at a first temperature less than or equal to 500°C for a time period ranging from 10 minutes to 1 hour to produce dehydrated perlite having a water content ranging from 1.0% to 4.5% by weight; heating the dehydrated perlite at a second temperature greater than 750°C to produce expanded perlite; and milling the expanded perlite; wherein the milled, expanded perlite has a $d_{50}$ diameter ranging from about 5 $\mu$m to about 50 $\mu$m. In some cases, the first temperature may range from 300°C to 500°C. Heating the perlite source material at the first temperature may reduce the water content of the perlite source materials, e.g., by at least 20%, at least 30%, or at least 50% relative to the water content before heating. In some examples, heating the perlite source material at the first temperature may reduce the water content of the perlite source material by at least 1.0%, at least 1.5%, or at least 2.0% by weight. In some cases, the water content of the perlite source material may be greater than 3.5% by weight, and the water content of the dehydrated perlite ranges from 1.0% to 3.5% by weight.

In some cases, the recovery of the expanded perlite having a diameter greater than or equal to 5 $\mu$m relative to the perlite source material may be at least 80%. For example, the recovery of the expanded perlite having a diameter greater than or equal to 5 $\mu$m relative to the perlite source material is at least 95%.

According to some aspects of the present disclosure, the expanded perlite may have a $d_{10}$ diameter less than 20 $\mu$m before milling. In some cases, the milled, expanded perlite may have a $d_{50}$ diameter ranging from about 20 $\mu$m to about 30 $\mu$m. Additionally or alternatively, the milled, expanded perlite has a $d_{10}$ diameter ranging from about 5 $\mu$m to about 20 $\mu$m and/or a $d_{90}$ diameter ranging from about 50 $\mu$m to about 200 $\mu$m.

According to some aspects of the present disclosure, the filter aid may have a permeability ranging from about 1.5 darcy to about 1.9 darcy and a cake density greater than 15 lb/ft$^3$. For example, the filter aid may have a permeability ranging from about 2.5 darcy to about 3.5 darcy and a cake density greater than 9 lb/ft$^3$. In another example, example, the filter aid may have a permeability ranging from about 2.5 darcy to about 3.1 darcy and a cake density greater than 9 lb/ft$^3$. In another example, the filter aid may have a permeability ranging from about 1.5 darcy to about 2.5 darcy and a cake density greater than 13 lb/ft$^3$. In some cases, the milled, expanded perlite may have a loose density greater than 3.0 lb/ft$^3$.

In another example, a method for making a filter aid may comprise heating at a first temperature less than or equal to 500°C for a time period ranging from 10 minutes to 1 hour a perlite source material having a water content greater than 4.0% by weight to produce dehydrated perlite, wherein the dehydrated perlite has a water content ranging from 1.0% by weight to 3.5% by weight; heating the dehydrated perlite at a second temperature greater than 750°C to produce expanded perlite; and milling the expanded perlite, wherein the milled, expanded perlite has a $d_{50}$ diameter ranging from 5 $\mu$m to 50 $\mu$m; wherein the expanded perlite has a higher cake density and a higher flow rate than a reference expanded perlite produced by expanding the perlite source material.

Also disclosed herein include methods for filtering a liquid (not claimed). For example, the method may comprise contacting the liquid with a filter aid comprising expanded perlite, wherein the filter aid has a permeability ranging from about 1.5 darcy to about 4.0 darcy and a cake density ranging from about 9 lb/ft$^3$ to about 16 lb/ft$^3$. In one example, contacting the liquid with the filter aid may comprise dispersing the expanded perlite in the liquid. In some cases, the filter may be formed from the expanded perlite compacted together, and contacting the liquid with the filter aid may comprise passing the liquid through the filter aid at a flow rate ranging from 25 mL/min to 40 mL/min/cm2.

According to some aspects of the present disclosure, the liquid that may be filtered by the methods and filter aids disclosed herein may be a beverage. In some cases, the liquid may comprise beer, wine, liquor, juice, soda, water, tea, syrup, or a mixture thereof.

Further disclosed herein include filter aids (not claimed). An exemplary filter aid may comprise expanded perlite, wherein the expanded perlite has a $d_{50}$ diameter ranging from about 5 $\mu$m to about 50 $\mu$m, and wherein the filter aid has a permeability ranging from about 1.8 darcy to about 4.0 darcy and a cake density greater than 9 lb/ft$^3$. In some cases, the filter aid may further comprise a binder. In some cases, the filter aid has a cake density ranging from 14 lb/ft$^3$ to 16 lb/ft$^3$. In certain cases, the expanded perlite may be milled. 1 darcy equals 9.87 * 10$^{-13}$ m$^2$. 1 lb/ft$^3$ equals 16.02 kg/m$^3$. 1 psi equals 6.89 kPa.

**BRIEF DESCRIPTION OF THE DRAWINGS**

FIG. 1 shows the change in internal water content in paticulate perlite heated for different periods of time at 300°C.
FIG. 2 shows the change in particle sizes of the expanded unmilled particulateperlite in which the internal water content was reduced.
FIG. 3 shows the change in densities of the expanded paticulate perlite in which the internal water content was reduced.
FIG. 4 shows the changes in the characteristics of expanded milled paticulate perlite in which the internal water content was reduced.

**DETAILED DESCRIPTION**

Particular aspects of the present disclosure are described in greater detail below. The terms and definitions provided herein control, if in conflict with terms and/or definitions incorporated by reference.

As used herein, the terms "comprises," "comprising," or any other variation thereof are intended to cover a non-exclusive inclusion, such that a process, method, composition, article, or apparatus that comprises a list of elements does not include only those elements, but may include other elements not expressly listed or inherent to such process, method, composition, article, or apparatus. The term "exemplary" is used in the sense of "example" rather than "ideal."

As used herein, the singular forms "a," "an," and "the" include plural reference unless the context dictates otherwise. The terms "approximately" and "about" refer to being nearly the same as a referenced number or value. As used herein, the terms "approximately" and "about" should be understood to encompass ± 10% of a specified amount or value.

The present disclosure includes filter aids comprising expanded glassy minerals (e.g., perlite) and methods of preparation thereof. The filter aid may have high density and/or high permeability characteristics, which may be desired for various filtration applications. The filter aid may comprise a processed glassy mineral. The method for processing the glassy mineral may include at least partially dehydrating the glassy mineral and then expanding the dehydrated glassy mineral, and optionally milling the expanded dehydrated glassy mineral. Such expanded minerals may be used in filtration, e.g., as a filter aid. The dehydration may reduce the internal water content of the glassy mineral, so that when expanded, the dehydrated glassy mineral may have a higher density compared to an expanded, non-dehydrated glassy mineral. The high density of the processed glassy mineral may allow for reduced shipping cost (on a per-weight basis) and/or better performance of the material as a filter aid. For example, when milled to make a filter aid, the expanded dehydrated glassy mineral may have a higher permeability and higher wet density than expanded minerals that have not first undergone a dehydration step.

Glassy minerals, commonly referred to as "volcanic glasses," are generally formed by the rapid cooling of siliceous magma or lava. Exemplary glassy minerals include, for example, perlite, pumice, pumicite, obsidian, pitchstone, and volcanic ash. Perlite comprises silicon dioxide, aluminum oxide, and a combination of other metals or metal oxides, such as sodium oxide and iron oxide. For example, perlite may comprise about 70% to about 75% $SiO_2$, about 12% to about 14% $Al_2O_3$, about 0.5% to about 2% $Fe_2O_3$, about 3% to about 5% $Na_2O$, about 4% to about 5% $K_2O$, about 0.4% to about 1.5% CaO (by weight), and small amounts of other metallic elements. Perlite is typically gray to green in color with a vitreous, pearly luster, and characteristic concentric or arcuate onion skin-like (e.g., perlitic) fractures. Abundant spherical cracks can cause perlite to break into small pearl-like masses.

Perlite is also characterized as a hydrated glassy mineral, comprising an amount of internal, e.g., chemically-bonded, water. The internal water content of natural, unprocessed perlite typically ranges from about 2% to about 6%, which can depend on the geographical source. According to some aspects of the present disclosure, the perlite source material (e.g., natural, unprocessed perlite) may have a water content of greater than 5.0% by weight. According to some aspects, the perlite source material may have a water content less than 6.0% or less than 5.0% by weight, e.g., from about 2.0% to about 5.0%, from about 2.5% to about 5.0%, from about 3.0% to about 5.0%, from about 3.5% to about 5.0%, from about 4.0% to about 5.0%, from about 2.0% to about 4.5%, from about 2.5% to about 4.5%, from about 3.0% to about 4.5%, from about 3.5% to about 4.5%, from about 2.0% to about 4.0%, from about 2.5% to about 4.0%, from about 2.5% to about 3.5%, from about 2.0% to about 3.5%, or from about 2.5% to about 3.5% by weight.

The filter aids herein may be prepared by processing the perlite source material by one or more steps, which may include, for example, dehydration, expansion, milling, and/or particle size classification (e.g., screening).

The methods for making a filter aid herein may comprise dehydrating a glassy mineral, e.g., perlite source material, e.g., raw perlite ore. Dehydration may be achieved by heating the perlite source material, for example, and/or by exposing the perlite source material to a reduced pressure environment in order to reduce the water content. For example, the dehydration may reduce the water content of the perlite source material by at least 1.0%, at least 10.0%, at least 20.0%, or at least 50.0% by weight, e.g., the resulting dehydrated perlite having a water content that is reduced by about 1.0% to about 50.0% relative to the perlite source material, or from about 5.0% to about 50.0%, or from about 15.0% to about 30.0% by weight. According to some aspects of the present disclosure, for example, dehydration may reduce the water content of the perlite source material by about 0.5%, about 1.0%, about 1.5%, about 2.0%, about 3.0%, about 3.5%, about 4.0%, about 4.5%, or about 5.0% by weight. The term "dehydrated perlite" includes perlite source materials that have undergone at least one dehydration process and retain some amount of water. For example, dehydrating a perlite source mineral with a water content greater than 4.5% by weight (e.g., ranging from about 4.6% to about 6.0% or from about 5.0% to about 5.5% by weight) may reduce the water content to a level equal to or less than 4.0% by weight (e.g., the dehydrated perlite having a water content ranging from about 1.0% to about 4.0%, from about 2.0% to about 4.0%, or from about 2.0% to about 3.0% by weight).

The amount of water present in the perlite source material and the dehydrated perlite is determined by measuring the loss-on-ignition (LOI) value. The LOI value refers to the difference in weight of a material before and after heating at a sufficiently high temperature to remove the volatile components. The concentration of internal water is determined in the laboratory by measuring the weight of the sample, heating the sample at 1000°C in a high temperature furnace for a sufficient amount of time ( 1 hour) to remove the water, allowing the sample to cool, and then reweighing the sample. The weight loss (LOI) is then calculated as a weight percent, and corresponds to the amount of internal water originally present in the sample.

As mentioned above, dehydration may be performed by heating, e.g., at a temperature that is sufficient to reduce the water content (e.g., a temperature that causes evaporation of internal water present in the perlite source material) but not sufficient to expand the perlite. Dehydration is performed by heating the perlite source material at a temperature less than or equal to 500°C. For example, dehydration may be performed by heating the perlite source material at a temperature ranging from about 100°C, from about 150°C, from about 200°C, from about 350°C, or from about 300°C to about 500°C. In some cases, the dehydration may be performed by heating the perlite source material at about 300°C, about 350°C, about 400°C, about 450°C, about 500°C.

According to the invention, the perlite source material is heated for a time period ranging from 10 minutes to 1 hour. According to some aspects of the present disclosure, the perlite source material may be heated for a time period ranging from about 20 minutes to about 50 minutes, or from about 20 minutes to about 40 minutes. For example, the perlite source material may be heated for about 10 minutes, about 20 minutes, about 30 minutes, about 40 minutes, or about 1 hour.

The methods of making filter aids herein may further include expanding the dehydrated perlite. When heated at a high temperature (e.g., above about 750°C or about 800°C), the dehydrated perlite softens and at least a portion of the internal water vaporizes, which may cause the perlite to expand to a greater volume (e.g., about 5-20 times of the original volume). The vaporized water typically stretches the softened glassy material, forming small bubbles in the glassy matrix. The expanded perlite may include one or more cells, or parts of cells, in which a cell is essentially a void space partially or entirely surrounded by walls that become thinner through expansion of the glassy perlite material. Eventually particles of the expanded perlite material may break into smaller fragments. The presence of gas-filled or vacuous cells in a given volume of the expanded perlite typically results in a lower centrifuged wet density than for the same volume of unexpanded perlite. If at least a portion of the expanded cells are closed and air is entrapped therein, the particles of expanded perlite may float on water.

The expansion may be performed by heating the dehydrated perlite at a temperature that is high enough to cause softening of the glassy mineral. In some cases, for expansion, the dehydrated perlite may be heated at a temperature of at least 750°C, at least 800°C, at least 850°C, at least 900°C, at least 950°C, at least 1000°C, at least 1100°C, or at least 1200°C, e.g., a temperature ranging from about 750°C to about 1200°C, or from about 800°C to about 1100°C. In some examples herein, the heating may be performed quickly, e.g., for equal to or less than 60 seconds, e.g., for a period of time ranging from about 0.1 second to about 15 seconds, or from about 0.1 second to about 5 seconds.

As mentioned above, when expanded, the volume of the dehydrated perlite may be enlarged. For example, the expansion may enlarge the volume of the dehydrated perlite by at least 10%, e.g., a volume expansion of about 20%, about 50%, or about 100%. For example, the volume of the expanded perlite may be 2 times, 5 times, 10 times, 15 times, or 20 times greater than the volume of the unexpanded, dehydrated perlite.

Dehydration of the perlite source material may provide for an increased density of expanded perlite relative to a perlite source material that has not undergone dehydration prior to expansion. Without intending to be bound by theory, it is believed that the higher water content of the perlite source material may lead to over-expansion (e.g., due to greater vaporization), thinner cell walls, and more fragmentation of particles. In comparison, a relatively lower water content of the perlite source material may avoid over-expansion, leading to relatively thicker cell walls and less fragmentation, such that the expanded perlite has a higher density.

Further, the volume of the expanded perlite prepared from dehydrated perlite source material may be smaller than the volume of an expanded perlite prepared from the same perlite source material that has not undergone dehydration. In some cases, the volume of the dehydrated perlite prepared from dehydrated perlite may be at most 95%, 90%, 85%, 80%, 70%, 60%, 50%, or 30% of a reference expanded perlite prepared from the same perlite source material without dehydration. This decrease in volume and/or increase in density of expanded perlite prepared according to the methods herein, from a dehydrated perlite, may provide certain benefits. For example, the decreased volume and/or increased density may provide permeability and/or flow rate characteristics useful for filtration, as discussed further below. Further, for example, decreased volume and/or increased density may help to reduce the shipping cost relative to expanded perlite prepared without a dehydration step.

As discussed above, expansion can lead to fragmentation of perlite particles, providing for a relatively larger fraction of fine particulate matter. For some filtration applications, this fine particulate fraction may adversely affect the performance of the filter aid prepared from the expanded perlite. For example, a relatively higher fraction of fine particulates may lead to a slower flow rate. Accordingly, dehydration of the perlite source material prior to expansion may help to prevent or limit formation of fine particulates, e.g., due to over-expansion. Further, dehydration may increase the yield of expanded perlite, e.g., reducing the amount of fine particular matter that typically is not recovered following the expansion process. The amount of expanded perlite retrieved (e.g., particles above a threshold diameter of 5 μm) relative to the total amount of perlite subjected to expansion may be described as the percent recovery. **In** some examples of the methods herein, the recovery of expanded perlite (particles having a diameter equal to or greater than 5 μm) may be greater than 50%, that is, greater than 50% by weight of the dehydrated perlite is recovered as expanded perlite particles having a diameter greater than or equal to 5 μm. For example, the recovery may be at least 70%, at least 75%, at least 80%, at least 85%, at least 90%, or at least 95%. By avoiding or limiting production of fine particulates, the expanded perlite prepared from a dehydrated perlite according to the methods herein may have a recovery at least 5% higher than an expanded perlite prepared from the same perlite source material but without dehydration, e.g., 10%, 15%, 20%, 25%, 30%, 40%, 50%, 60%, or even 80% higher.

The invention further includes milling the expanded perlite. The milling may be performed according to any suitable technique, and may include milling. For example, the expanded perlite may be milled with a hammer mill..

Additionally, the expanded perlite may be classified, e.g., to provide a desired particle size distribution. For example, the expanded perlite (milled or unmilled) may be classified by air classification apparatus such as cyclone separators, e.g., to remove particles of a certain diameter, such as fine particles having a diameter less than 150 μm. According to some aspects of the present disclosure, screening may be used to determine the particle size distribution and the fine particulate fraction optionally removed, e.g., prior to using the expanded perlite for filtration. Screening refers to separating a particulate material into multiple particle size fractions using one or more sieves with specific mesh sizes. Thus, the particle size distribution of a given material may be expressed in terms of the percentage of the particles (by weight) in the material having a size that is greater or less than the mesh size. The following table lists standard mesh sizes and the corresponding size in microns (μm).

Table 1

| Mesh size | Opening |
|-----------|---------|
| 30 | 600 μm |
| 50 | 300 μm |
| 100 | 150 μm |
| 140 | 105 μm |

(continued)

| Mesh size | Opening |
|---|---|
| 200 | 75 $\mu$m |
| 500 | 25 $\mu$m |

In some cases, the particle size distribution of the expanded perlite (with or without milling) may be measured by a suitable particle size analyzer. For such measurements, the size of a given particle may be expressed in terms of the diameter of a sphere of equivalent diameter ("equivalent spherical diameter" (ESD)) that sediments through a fully dispersed suspension of the particles in an aqueous medium. For example, a particle size analyzer made by Microtrac® Systems, Inc. may be used to obtain the particle size distribution by plotting the cumulative percentage by volume of particles having a given ESD. The median particle size, or $d_{50}$ value, is the value at which 50% by volume of the particles have an ESD less than that $d_{50}$ value. The $d_{10}$ value is the value at which 10% by volume of the particles have an ESD less than that $d_{10}$ value. The $d_{90}$ value is the value at which 90% by volume of the particles have an ESD less than that $d_{90}$ value.

According to some aspects of the present disclosure, the $d_{10}$ of the expanded perlite may range from about 5 $\mu$m to about 30 $\mu$m, such as from about 5 $\mu$m to about 20 $\mu$m, from about 10 $\mu$m to about 20 $\mu$m, from about 10 $\mu$m to about 30 $\mu$m, from about 15 $\mu$m to about 30 $\mu$m, or from about 20 $\mu$m to about 30 $\mu$m.

The milled, expanded perlite has a $d_{50}$ diameter ranging from 5 $\mu$m to 50 $\mu$m. Further, for example, the $d_{50}$ of the expanded perlite may range from about 5 $\mu$m to about 40 $\mu$m, from about 5 $\mu$m to about 30 $\mu$m, from about 10 $\mu$m to about 30 $\mu$m, from about 10 $\mu$m to about 40 $\mu$m, from about 20 $\mu$m to about 40 $\mu$m, or from about 20 $\mu$m to about 30 $\mu$m.

Additionally or alternatively, the $d_{90}$ of the expanded perlite may range from about 50 $\mu$m to about 200 $\mu$m, such as from about 50 $\mu$m to about 100 $\mu$m, from 70 $\mu$m to about 120 $\mu$m, from 80 $\mu$m to about 150 $\mu$m, from about 60 $\mu$m to about 200 $\mu$m, from about 80 $\mu$m to about 200 $\mu$m, from about 100 $\mu$m to about 200 $\mu$m, from about 120 $\mu$m to about 200 $\mu$m, or from about 150 $\mu$m to about 200 $\mu$m. Thus, according to some examples herein, the expanded perlite (prepared from a dehydrated perlite as discussed above) may be milled such that the expanded perlite has a particle size distribution wherein the $d_{10}$ diameter ranges from about 5 $\mu$m to about 20 $\mu$m, the $d_{50}$ diameter ranges from about 20 $\mu$m to about 30 $\mu$m, and the $d_{90}$ diameter ranges from about 50 $\mu$m to about 200 $\mu$m.

The expanded perlite prepared according to the methods herein may exhibit properties useful for filtration, such as high porosity, high loose density, high wet density, sufficient permeability, and/or chemical inertness.

The expanded perlite prepared according to the present disclosure may have a measurable pore volume and/or pore size, which may be measured by any appropriate measurement technique. For example,, pore volume and pore size may be measured with an AutoPore IV 9500 series mercury porosimeter from Micromeritics Instrument Corporation (Norcross, Georgia, USA), which can determine measure pore diameters in a range from 0.006 $\mu$m to 600 $\mu$m. As used to measure the pore volume of the expanded perlite disclosed herein, that porosimeter's contact angle may be set at 130 degrees, and the pressure may range from 0 to 33,000 psi. In some examples, the pore volume of the expanded perlite may be about equal to the perlite source material from which it is made. In some embodiments, the pore volume may be in a range from about 1 mL/g to about 10 mL/g, from about 4 mL/g to about 10 mL/g, or from about 4 mL/g to about 6 mL/g. In some examples, the pore volume may be about 5 mL/g. Further, for example, the median pore size of the expanded perlite may range from about 1 $\mu$m to about 10 $\mu$m, from about 2 $\mu$m to about 7 $\mu$m, or from about 2 $\mu$m to about 5 $\mu$m.

The expanded perlite prepared according to the present disclosure may have a measurable BET surface area. BET surface area, as used herein, refers to the technique for calculating specific surface area of physical absorption molecules according to Brunauer, Emmett, and Teller ("BET") theory. BET surface area may be measured by any appropriate measurement technique now known to the skilled artisan or hereafter discovered. In one exemplary method, BET surface area may be measured with a Gemini III 2375 Surface Area Analyzer, using pure nitrogen as the sorbent gas, from Micromeritics Instrument Corporation (Norcross, Georgia, USA). In some embodiments, the BET surface area may be in a range from about 1 m²/g to about 20 m²/g, such as for example from about 1 m²/g to about 10 m²/g or from about 1 m²/g to about 5 m²/g.

The expanded perlite prepared according to the present disclosure may have a measurable loose density, which refers to the mass per unit volume of the dry material. For example, the loose (not compacted) expanded perlite may be filled into a 250 mL cylinder, such that the loose density of the expanded perlite equals to the mass of the filled material divided by 250 mL. In some cases, the loose density may be in a range from about 3 lb/ft³ to about 10 lb/ft³ (1 g/mL = 62.428 lb/ft³), such as for example from about 3 lb/ft³ to about 4.5 lb/ft³.

The expanded perlite prepared according to the present disclosure may have a wet density and floater content suitable for a filter aid. According to one exemplary method, a sample of expanded perlite of known weight from about 1.00 g to about 2.00 g is placed in a calibrated 15 mL centrifuge tube to which deionized water is added to make up a volume of approximately 15 mL. The mixture is shaken thoroughly until all of the sample is wetted, and no powder remains. Additional deionized water is added around the top of the centrifuge tube to rinse down any mixture adhering to the side of the tube from shaking, forming a suspension. The tube is centrifuged for 5 minutes at 2500 rpm on an IEC Centra® MP-4R centrifuge, equipped with a Model 221 swinging bucket rotor (International Equipment Company; Needham Heights, Massachusetts, USA). Following centrifugation, the tube is carefully removed without disturbing the solids, and the levels (e.g., volumes) of the settled matter and the floating matter are measured in $cm^3$. The centrifuged wet density of the sample is calculated by dividing the weight of the settled and floated matter by the measured volume. The floater content corresponds to the ratio of the volume of the floating portion after centrifugation to the total floated and settled matter.

In some cases, the wet density of the expanded perlite may range from about 5.0 $lb/ft^3$ to about 30.0 $lb/ft^3$, such as from about 6.0 $lb/ft^3$ to about 18.0 $lb/ft^3$, from about 7.0 $lb/ft^3$ to about 16.0 $lb/ft^3$, or from about 9.0 $lb/ft^3$ to about 16.0 $lb/ft^3$ (1 g/mL = 62.428 $lb/ft^3$). According to some aspects of the present disclosure, when milled substantially the same particle size distribution, the expanded perlite may have a higher wet density compared to an expanded perlite prepared from the same perlite source material that has not undergone dehydration. For example, when milled substantially the same particle size distribution, the expanded perlite disclosed herein may have a wet density that is at least 5%, at least 10%, at least 20%, at least 40%, or at least 80% higher than the wet density of a counterpart expanded perlite prepared without a dehydration step.

The expanded perlite prepared according to the present disclosure may have permeability characteristics suitable for a filter aid. Permeability of the expanded perlite may be measured by any appropriate measurement technique. Permeability is generally measured in darcy units, wherein 1 darcy characterizes a porous medium about 1 cm high with a 1 $cm^2$ cross-section that permits a fluid with a viscosity of 1 mPa•s to flow with a flow rate of 1 $cm^3$/sec under an applied pressure differential of 1 atmosphere. The permeability of a material may be measured by Permeability Flowrate by volume (PFRv) method. The permeability K (in darcy units) at standard pressure and temperature (1 bar, 273 K) using Equation 1

$$K = \frac{q\mu L}{A \Delta P} \qquad \qquad \text{Equation 1}$$

where q is the flow rate, $\mu$ is the water viscosity, L is the cake thickness A is the filter surface area, and $\Delta P$ is the pressure drop across the cake. In one exemplary method for measuring permeability, a specially constructed device is designed to form a filter cake on a septum from a suspension of filtration media (e.g., expanded perlite) in water, and the time required for a specified volume of water to flow through a measured thickness of the filter cake of known cross-sectional area is measured. as follows: (1) suspending 2 grams of the material in water in a tube with a filter and allowing the 2 grams of material to build a cake at the filter; (2) passing 8 mL of water through the cake and measuring the time needed; and (3) calculating the permeability K (in darcy units) using Equation 1.

In some cases, the permeability of the expanded perlite may range from about 0.01 darcy to about 20 darcys, such as from about 0.5 darcy to about 10 darcys, from about 0.5 darcy to about 4.5 darcys, from about 1 darcy to about 4 darcys, from about 1.4 darcys to about 4 darcys, or from about 1.5 darcys to about 3 darcys. According to some aspects of the present disclosure, when milled to substantially the same particle size distribution, the expanded perlite prepared as disclosed herein may have a higher permeability compared to an expanded perlite prepared from the same perlite source material but without a dehydration step. For example, when milled substantially the same particle size distribution, the expanded perlite according to the present disclosure may have a permeability that is at least 5%, at least 10%, at least 20%, at least 40%, or at least 80% higher than an expanded perlite prepared from the same perlite source material but without a dehydration step. According to some other aspects of the present disclosure, the expanded perlite prepared as disclosed herein may have a lower permeability compared to an expanded perlite prepared from the same perlite source material but without a dehydration step

The expanded perlite disclosed herein may be used in a variety of processes, applications, and materials. For example, the expanded perlite may be used as a filter aid, or incorporated into a filter aid material or composition.

According to some aspects of the present disclosure, the expanded perlite may be used as a filter aid without the addition of other materials. For example, the expanded perlite may serve as a filter aid when dispersed in a liquid to be filtered. In another example, the expanded perlite may be compacted into a filter cake that serves as a filter aid, e.g., for filtering a liquid that passes through the filter cake.

In some examples, the filter aid may comprise an expanded perlite prepared according to the methods herein and at least one additional material serving as a filter aid medium. Examples of suitable additional filter aid media include, but are not limited to, uncalcined diatomaceous earth, calcined/flux-calcined diatomaceous earth, cellulose, activated charcoal, feldspars, nepheline syenite, sepiolite, zeolite, and clay. Such mixtures may be used to modify filtration performance, e.g., to achieve a desired result in terms of parameters such clarity and/or throughput. The additional filter medium or media may be present in any appropriate amount. For example, the additional filter medium (or media) may be present from about 0.01 to about 100 parts of at least one additional filter medium per part of the processed glassy mineral. In some cases, the additional filter medium (or media) is present from about 0.1 to about 10 parts or from about 0.5 to about 5 parts of the processed glassy mineral.

The filter aids herein may be formed into sheets, pads, cartridges, or other monolithic or aggregate media capable of being used as supports or substrates in a filtration process. Considerations in the manufacture of filter aid compositions may include a variety of parameters, including, but not limited to, total soluble metal content of the composition, median soluble metal content of the composition, particle size distribution, pore size, cost, and availability.

One or more adsorbents such as silica gel or tannin may be added to achieve auxiliary performance, such as to obtain certain chemical properties in the filtrate. Such mixtures may also be in loose form, or in some cases may be consolidated into forms such as filter sheets, pads, or cartridges. The filter aid described herein may further comprise a binder, such as sodium silicate.

Filter aids comprising the expanded perlite disclosed herein may be used in a variety of processes and compositions. For example, the filter aid may be applied to a filter septum to protect it and/or to improve the clarity of the liquid to be filtered in a filtration process. In some examples, the filter aid may be used in pre-coating, in body feeding, or a combination of both pre-coating and body feeding, in a filtration process.

Provided herein are methods for filtering a liquid. Filtering refers to the removal of certain impurities or other components from a fluid. According to some aspects of the present disclosure, the method may include passing a liquid through, or otherwise contacting a liquid with, a filter aid comprising the expanded perlite described herein. As mentioned above, in some examples, the filter aid may be added directly to the liquid to be filtered, known as body feeding. For example, dispersing the expanded perlite in the liquid to be filtered may increase flow rate and/or extend the filtration cycle as compared to passing the liquid through a filter cake or other filter aid in which the filtration medium is compacted together. After a period of time sufficient for filtration of the liquid, the particles may be collected and removed from the liquid.

In some cases, the methods may include pre-coating at least one filter element with the expanded perlite, and contacting the liquid to be filtered with the at least one coated filter element. The filter element may be a septum (e.g., mesh screen, membrane, or pad), a cylindrical tube or wafer-like structure covered with a plastic, or metal fabric of sufficiently fine weave. In certain cases, the filter element may be a porous structure with a filter element void to allow material of a certain size to pass through a filtration device. The filter aid may initially be applied to a septum of a filter element in a process known as pre-coating. Pre-coating may generally involve mixing a slurry of water and the filter aid, and introducing the slurry into a stream flowing through the septum. During this process, a thin layer, such as, for example, about 1.5 mm to about 3.0 mm, of filter aid may be deposited on the septum, thus forming the filtration device.

The liquid may pass the filter aid at a flow rate that is suitable for filtration application. For a cross-sectional area of 20 cm$^2$, the flow rate may be in the range from about 10 mL/min to about 50 mL/min, from about 10 mL/min to about 40 mL/min, from about 10 mL/min to about 30 mL/min, from about 20 mL/min to about 40 mL/min, from about 30 mL/min to about 40 mL/min, or from about 30 mL/min to about 35 mL/min.

In certain cases, the methods may include suspending the filter aid in the liquid to be filtered, and thereafter separating the filter aid from the filtered liquid. For example, the suspension of the filter aid and the liquid may be applied to a filter element, which separate the filter aid and the liquid. One or more particles in the liquid may be trapped on the filter element with the filter aid.

The methods herein may be used to filter various types of liquids. According to some aspects of the present disclosure, the liquid that is filtered may be a beverage or other edible or food-safe liquid. Exemplary beverages include, but are not limited to, tea, water, vegetable-based juices, fruit juices, alcoholic beverage such as (distilled spirits and malt-based liquids). Exemplary malt-based liquids include, but are not limited to, sake, beer and wine. In at least one example, the liquid may be a beer. In some cases, the liquid may be an oil, such as an edible oil or a fuel oil. Exemplary of edible oils include, but are not limited to, coconut oil, corn oil, cottonseed oil, olive oil, palm oil, peanut oil, rapeseed oil, canola oil, safflower oil, sesame oil, soybean oil, sunflower oil, or any mixture thereof. **In** some examples, the liquid may be a sweetener, such as a syrup (e.g., corn syrup or maple syrup) or molasses. Other types of liquids that may be filtered according to the methods herein include, but are not limited to, waste water, sugar solutions (e.g., plant extracts), chemicals (for example, organic and inorganic chemicals including solvents such as methanol, and solutions such as aqueous sodium chloride).

The expanded perlite described herein may be used in conjunction with a variety of filtration and separation devices that are designed to use particulate media, including those devices which use principles of gravity, pressure, vacuum, or other applied forces to encourage passage of liquid through the particulate media.

Other aspects and embodiments of the present disclosure will be apparent to those skilled in the art from consideration of the specification and practice of the embodiments disclosed herein.

## EXAMPLES

The following examples are intended to illustrate the present disclosure without, however, being limiting in nature. It is understood that the present disclosure encompasses additional aspects and embodiments consistent with the foregoing description and following examples.

Example 1

This example demonstrates an exemplary method for reducing internal water content in perlite ores before expansion, and the effects of the dehydration on the properties of the perlite materials.

Fifty pounds of paticulate perlite was obtained. The perlite was dried at 150°C for 2 hours, to render fine ore particles free flowing and larger blocks devoid of external moisture. The samples were jaw-crushed, further comminuted with a Metszo roller mill, and screened to obtain the -50 +100 mesh (300-150 micron) fraction for expansion testing. All testing was performed utilizing the -50 +100 mesh fraction of the paticulate ore. The water retained in the paticulate perlite after drying at 150°C was measured by heating in the muffle furnace at 1100°C for 2 hours, and was determined to be 4.97%. The vast majority of water was in the form of $H_2O$, although there were minor amounts of OH- and $CO_2$ present as well.

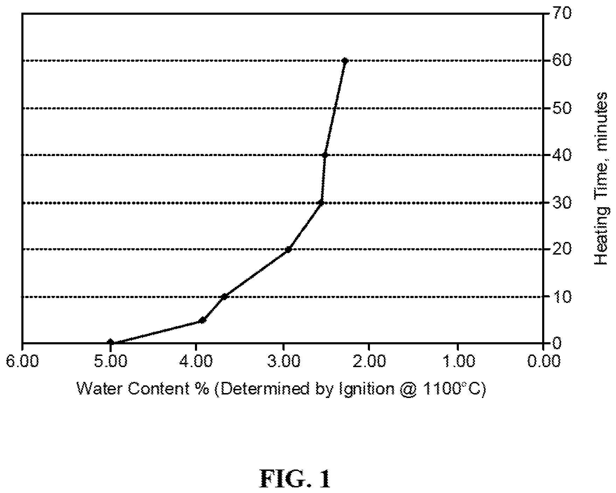

Muffle furnace heating was used to reduce the water content in perlite ore. Since a portion of the ore after heating was placed in a second muffle furnace at a temperature well above water liberation temperature, the hydration concentration was easily determined gravimetrically. The result of these measurements is shown in FIG. 1, where the initial water concentration is 4.97% before dehydration.

The perlite ore was divided into samples for 100 g for dehydration at 300°C for times varying from 5 to 60 minutes as summarized in Table 2.

Table 2

| Sample | Dehydration temp (°C) | Time (min) | Water |
|--------|----------------------|------------|-------|
| A | -- | -- | 4.97% |
| B | 300 | 5 | 3.92% |
| C | 300 | 10 | 3.66% |
| D | 300 | 20 | 2.92% |
| E | 300 | 30 | 2.56% |
| F | 300 | 40 | 2.52% |
| G | 300 | 60 | 2.29% |

Samples were expanded using perlite ore standards from Milos, Greece and a classical ore from Superior, Arizona to confirm maximum expansion conditions. The sample was fed at a constant rate, keeping thermocouple temperature constant in the expander between (871 to 877 °C) 1600-1610°F.

The experiments in this example measured the effect of hydration on those aspects of perlite expansion crucial to increased production and efficiency of both expanded unmilled perlite (EUP) and expanded milled perlite (EMP) for filter aid product. Prior to milling, portions of the expanded perlite were tested for loose weight, screened fractions, percent sinks, blue light color, and compaction resistance.

Test results of the expanded unmilled paticulate perlite are presented in Table 3.

Table 3

| Sample | Loose Density (lb/ft$^3$) | Recovery (%) | -100 mesh (%) | Sinks (%) | Sink Density (lb/ft$^3$) | Tap Density (lb/ft$^3$) | Blue Light |
|--------|------|------|------|------|------|------|------|
| A | 2.9 | 77.0 | 21.1 | 1.4 | 39.5 | 3.6 | 76.69 |
| B | 2.7 | 80.9 | 17.4 | 1.1 | 27.0 | 3.3 | 77.20 |
| C | 2.6 | 85.3 | 11.5 | 1.4 | 31.2 | 3.1 | 76.70 |
| D | 2.9 | 92.4 | 4.5 | 2.4 | 28.7 | 3.6 | 76.14 |
| E | 3.0 | 94.9 | 2.6 | 4.0 | 30.8 | 3.8 | 73.69 |
| F | 3.3 | 95.7 | 2.1 | 7.0 | 34.6 | 3.8 | 74.30 |
| G | 4.4 | 97.0 | 0.9 | 13.6 | 37.4 | 4.9 | 73.40 |

As shown in Table 3, the loose weight dropped initially until about 3% hydration, at which point it steadily increased. The concentration of fine particulates also dropped gradually until about 3% hydration. The sink concentration (unexpanded or partially expanded perlite) initially remained constant, and then increased with hydration concentrations below 3%. The sink percentages were measured by allowing perlite-water suspension in a separatory funnel to settle for 30 seconds, collecting the sunk perlite at the bottom of the separatory funnel, weighing the collected sunk perlite, and calculating the amount of the collected sunk perlite relative to the total perlite in the suspension. The sink density of the perlite was calculated by dividing the mass by the volume of the collected sunk perlite. Also, the color as measured by Blue Light Brightness stayed fairly constant to 3% hydration, then reduced for lower hydration levels. Further, reducing internal water in the perlite ore had little effect on compaction resistance. Perlite recovery (total production) was found to increase in all cases.

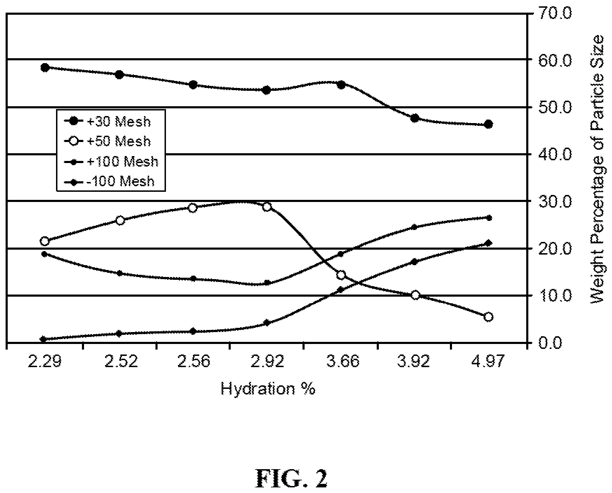

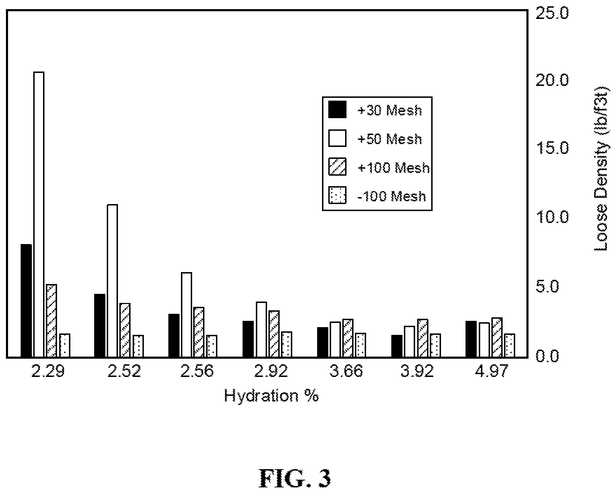

The results show that the particle sizes generated with hydration concentration varied with hydration, as did the densities of these fractions. Decreasing hydration showed an increase in overall particle size of the product (FIG. 2). The +30 and +50 mesh fractions percentages increased significantly, while the +100 and -100 mesh decreased in concentration as the internal water content was reduced, indicating that the concentration of fine particulates was reduced. Densities of all fractions remained constant to approximately 3% hydration. Density of the expanded unmilled perlite increased due to the increasing density of the -50 mesh particulate (FIG. 3). Densities of coarse perlite fractions remained constant, while fine fractions exhibited density increase with decreasing hydration.

A remaining portion was milled using a MIKROPUL Sample hammer mill using a 0.01 herringbone screen at about 3000 rpm. The latter portion was then tested for PFRv permeability, wet density, float concentration, and % -635 (-25 micron) and +140 (+106 micron) mesh fractions using an Alpine screen. Test results on the expanded milled paticulate perlite are presented in Table 4.

Table 4

| Sample | PFRv Permeability | | | | | | Alpine Screen Data | |
|---|---|---|---|---|---|---|---|---|
| | PFRv time (sec) | PFRv Flow Rate (ml/sec) | Cake Density (lb/ft$^3$) | PFRv Permeability (Darcy) | Wet Density (lb/ft$^3$) | Wet Density Float (%) | +140 mesh (%) | -635 mesh (%) |
| A | 59.3 | 0.13 | 15.6 | 0.61 | 12.5 | 8.0 | 3.2 | 50.6 |
| B | 56.0 | 0.14 | 15.8 | 0.63 | 12.5 | 6.0 | 3.0 | 51.0 |
| C | 52.7 | 0.15 | 16.4 | 0.65 | 13.3 | 4.3 | 3.0 | 48.2 |
| D | 47.0 | 0.17 | 18.9 | 0.63 | 14.9 | 4.8 | 3.0 | 44 |
| E | 48.5 | 0.17 | 20.5 | 0.57 | 16.0 | 2.6 | 5.2 | 42.4 |
| F | 46.8 | 0.17 | 21.9 | 0.55 | 16.9 | 2.7 | 6.4 | 40.4 |
| G | 38.4 | 0.21 | 28.4 | 0.52 | 16.9 | <1 | 11.4 | 34.0 |

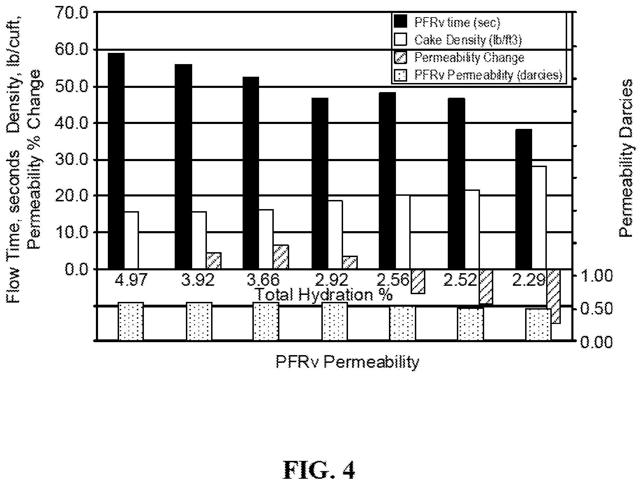

As shown in Table 4, both the flow rate and the wet density were found to increase with decreasing perlite hydration prior to expansion. Flow time (seconds/ml) is inversely proportional to flow rate (ml/seconds). The increase in flow rate was greater than the increase in wet density, so that the permeability increased when the internal water content was between 3% and 5%. At lower internal water content, the expanded milled perlite tended to show lower permeability due to a relatively greater increase in wet density. Permeability was not significantly impacted by hydration reduction, even though the flow rate was significantly increased, due to the concomitant increase in density. These characteristics are shown graphically in FIG. 4. Further, ultrafines (e.g., $\delta$ 25 $\mu$m) decreased with lower internal water content, which correlated with the increase in flow rate.

The test results indicate that reducing the internal water content in perlite prior to expansion resulted in improved filter aid properties and a higher yield of expanded products.

Example 2

This example demonstrates dehydration and subsequent expansion of perlite on a laboratory scale. Perlite samples were obtained from the Superior, Arizona perlite deposit. The internal water content of two samples was modified by preheating at 330°C for 20 minutes and 40 minutes, respectively, for comparison with a sample that did not undergo dehydration (see Table 5). The loss on ignition (LOI), calculated as a weight percent, was measured for each sample to determine the amount of internal water present in the perlite ore.

The perlite samples were then expanded in an expansion furnace. The loose density and the recovery following expansion was measured with results in Table 5 below, showing an increase in density for the dehydrated sample.

Table 5

| Sample | Preheat Time (min) | Preheat Temp (°C) | LOI | Loose Density (lb/ft$^3$) | Recovery (%) |
|---|---|---|---|---|---|
| No Dehydration | -- | -- | 4.5% | 2.8 | 83.7 |
| Preheat 1 | 20 | 330 | 3.2% | 3.1 | 90.6 |
| Preheat 2 | 40 | 330 | 2.7% | 3.7 | 95.2 |

The sample were then milled, and the flow rate, cake density, and permeability of each sample was measured. The results shown in Table 6 indicate that that dehydration of the samples prior to expansion increased the cake (wet) density and the flow rate with a moderate reduction in permeability.

Table 6

| Sample | Flow Rate (ml/min) | % change | Cake Density (lb/ft$^3$) | % change | Permeability (darcy) | % change |
|---|---|---|---|---|---|---|
| No Dehydration | 27.0 | -- | 6.7 | -- | 4.7 | -- |
| Preheat 1 | 29.2 | 8.0 | 8.6 | 28.1 | 4.0 | -14.9 |
| Preheat 2 | 32.6 | 20.7 | 10.1 | 51.5 | 3.8 | -20.0 |

The relative change in the filtration properties of the samples ("% change" in Table 6, above) indicate that progressive dehydration causes product flow rate to increase. For the sample heated for 40 minutes ("preheat 1"), the cake density increased by about 50% relative to the sample expanded without a dehydration step. This increase in density was greater than both the increase in flow rate (about 20%) and the decrease in permeability (about 20% lower permeability).

Example 3

This example demonstrates dehydration and subsequent expansion of perlite on an industrial scale. Three different types of perlite products (X, Y, and Z) were tested, wherein samples of X and Y were dehydrated and then expanded for comparison to samples that were expanded without a dehydration step. Samples of perlite Z were first dehydrated and then expanded. The LOI for each of X and Y was measured at 4.5%, while the LOI of the dehydrated samples of each of X, Y, and Z was 3.5%. Following expansion and milling, properties of flow rate, cake density, and permeability were measured with results shown in Tables 7-9.

Table 7

| Perlite | +140 MESH (%) | Flow Rate (ml/min) | Cake Density (lb/ft$^3$) | Permeability (Darcy) |
|---|---|---|---|---|
| X | 17.7 | 23.5 | 12.2 | 2.2 |
| X | 18.5 | 25.0 | 13.3 | 2.2 |
| X | 19.3 | 25.1 | 12.5 | 2.4 |
| X | 20.4 | 24.7 | 12.7 | 2.3 |
| **Average** | **19.0** | **24.6** | **12.7** | **2.3** |
| X-dehydrated | | | | |
| X-dehydrated | 18 | 25.3 | 14.2 | 2.1 |
| X-dehydrated | 18.8 | 25.5 | 15.2 | 2.0 |
| X-dehydrated | 18.3 | 26.2 | 15.6 | 2.0 |
| X-dehydrated | 18.7 | 26.1 | 14.9 | 2.0 |
| **Average** | **18.5** | **25.8** | **15.0** | **2.0** |
| **% Change** | -2.8 | 4.8 | 18.0 | -11.2 |

Table 8

| Perlite | +140 MESH (%) | Flow Rate (ml/min) | Cake Density (lb/ft$^3$) | Permeability (Darcy) |
|---|---|---|---|---|
| Y | 16 | 24.2 | 8.2 | 3.4 |
| Y | 18.5 | 23.6 | 7.8 | 3.5 |
| Y | 17 | 23.9 | 8.2 | 3.4 |
| Y | 17.8 | 25.0 | 8.0 | 3.6 |
| Y | 17.9 | 25.1 | 7.9 | 3.7 |
| **Average** | **17.4** | **24.4** | **8.0** | **3.5** |
| Y-dehydrated | 15.5 | 27.0 | 10.2 | 3.1 |
| Y-dehydrated | 15.8 | 27.9 | 10.4 | 3.1 |
| Y-dehydrated | 16.3 | 26.5 | 9.6 | 3.2 |
| Y-dehydrated | 19.2 | 27.9 | 9.2 | 3.6 |
| Y-dehydrated | | 27.1 | 9.6 | 3.3 |
| **Average** | **16.7** | **27.3** | **9.8** | **3.3** |
| **% Change** | -4.2 | 11.9 | 22.0 | -8.1 |

Table 9

| Perlite | +140 MESH (%) | Flow Rate (ml/min) | Cake Density (lb/ft$^3$) | Permeability (Darcy) |
|---|---|---|---|---|
| Z-dehydrated | 15.8 | 25.3 | 13.0 | 2.3 |
| Z-dehydrated | 15.2 | 24.1 | 13.9 | 2.0 |
| Z-dehydrated | 14.6 | 25.4 | 16.0 | 1.9 |
| **Average** | **15.2** | **24.9** | **14.4** | **2.1** |

As the data above show, dehydration of the perlite samples before expansion increased the flow rate and cake density by about 5-20% while reducing permeability by about 10%.

Aspects of the present disclosure are further illustrated by reference to the following, non-limiting exemplary embodiments.

In the method of claim 1:

optionally the first temperature ranges from 300°C to 500°C;

optionally, before milling, the expanded perlite has a $d_{10}$ diameter less than 20 $\mu$m;

optionally the filter aid has a permeability ranging from about 1.5 darcy to about 1.9 darcy and a cake density greater than 15 lb/ft$^3$;

optionally the filter aid has a permeability ranging from about 2.5 darcy to about 3.5 darcy and a cake density greater than 9 lb/ft$^3$;

optionally the filter aid has a permeability ranging from about 1.5 darcy to about 2.5 darcy and a cake density greater than 13 lb/ft$^3$;

optionally the milled, expanded perlite has a loose density greater than 3.0 lb/ft$^3$;

optionally the water content of the perlite source material is greater than 3.5% by weight, and the water content of the dehydrated perlite ranges from 1.0% to 3.5% by weight;

optionally heating at the first temperature reduces the water content of the perlite source material by at least 20%, at least 30%, or at least 50% relative to the water content before heating;

optionally heating at the first temperature reduces the water content of the perlite source material by at least 1.0%, at least 1.5%, or at least 2.0% by weight;

optionally the milled, expanded perlite has a $d_{50}$ diameter ranging from about 20 $\mu$m to about 30 $\mu$m;

optionally the milled, expanded perlite has a $d_{10}$ diameter ranging from about 5 $\mu$m to about 20 $\mu$m and a $d_{90}$ diameter ranging from about 50 $\mu$m to about 200 $\mu$m;

optionally a recovery of the expanded perlite having a diameter greater than or equal to 5 $\mu$m relative to the perlite source material is at least 80%;

optionally a recovery of the expanded perlite having a diameter greater than or equal to 5 $\mu$m relative to the perlite source material is at least 95%; and
optionally the method comprises heating a perlite source material having a water content greater than 4.0% by weight, the dehydrated perlite has a water content ranging from 1.0% by weight to 3.5% by weight; and the expanded perlite has a higher cake density and a higher flow rate than a reference expanded perlite produced by expanding the perlite source material.

The disclosure further includes a method (not claimed) for filtering a liquid, comprising contacting the liquid with a filter aid comprising expanded perlite, wherein the filter aid has a permeability ranging from about 1.5 darcy to about 4.0 darcy and a cake density ranging from about 9 lb/ft$^3$ to about 16 lb/ft$^3$, in which:

optionally the filter is formed from the expanded perlite compacted together, and contacting the liquid with the filter aid comprises passing the liquid through the filter aid at a flow rate ranging from 25 mL/min to 40 mL/min;
optionally contacting the liquid with the filter aid comprises dispersing the expanded perlite in the liquid;
optionally the liquid is a beverage; and
optionally the liquid comprises beer, wine, liquor, juice, soda, water, tea, syrup, or a mixture thereof.

The disclosure also includes a filter aid (not claimed) as described above.
The disclosure also includes a filter aid (not claimed) comprising expanded perlite, wherein the expanded perlite has a $d_{50}$ diameter ranging from about 5 $\mu$m to about 50 $\mu$m, and wherein the filter aid has a permeability ranging from about 1.8 darcy to about 4.0 darcy and a cake density greater than 9 lb/ft$^3$, in which

optionally the filter aid has a cake density ranging from 14 lb/ft$^3$ to 16 lb/ft$^3$;
the filter aid optionally further comprises a binder; and
optionally the expanded perlite is milled.

The disclosure also includes the use (not claimed) of the filter aid described above for filtering a liquid, optionally wherein the liquid comprises beer, wine, liquor, juice, soda, water, tea, syrup, or a mixture thereof.
The disclosure also includes a system (not claimed) for filtering a liquid comprising the filter aid according to any of embodiments 1-25, optionally wherein the liquid comprises beer, wine, liquor, juice, soda, water, tea, syrup, or a mixture thereof.
Other aspects and embodiments of the present disclosure will be apparent to those skilled in the art from consideration of the specification and practice of the embodiments disclosed herein.
It is intended that the specification and examples therein be considered as exemplary only, with a true scope of the present disclosure being indicated by the following claims.

## Claims

1. A method for making a filter aid, comprising:

heating a perlite source material at a first temperature less than or equal to 500°C for a time period ranging from 10 minutes to 1 hour to produce dehydrated perlite having a water content ranging from 1.0% to 4.5% by weight, wherein the water content is determined by measuring the loss-on-ignition value (LOI), which refers to the difference in weight of a sample before and after heating at a temperature of 1000°C in a high temperature furnace for a time of 1 hour to remove the volatile components, the LOI is then calculated as a weight percent, and corresponds to the amount of internal water originally present in the sample;
heating the dehydrated perlite at a second temperature greater than 750°C to produce expanded perlite; and
milling the expanded perlite;
wherein the milled, expanded perlite has a $d_{50}$ diameter ranging from 5 $\mu$m to 50 $\mu$m.

2. The method of claim 1, wherein the first temperature ranges from 300°C to 500°C.

3. The method of claim 1 or 2, wherein, before milling, the expanded perlite has a $d_{10}$ diameter less than 20 $\mu$m.

4. The method of any one of claims 1 to 3, wherein the milled, expanded perlite has a loose density greater than 48.1 kg/m$^3$ (3.0 lb/ft$^3$).

5. The method of any one of claims 1 to 4, wherein the water content of the perlite source material is greater than 3.5% by weight, and the water content of the dehydrated perlite ranges from 1.0% to 3.5% by weight.

6. The method of any one of claims 1 to 5, wherein heating at the first temperature reduces the water content of the perlite source material by at least 20%, at least 30%, or at least 50% relative to the water content before heating, or wherein heating at the first temperature reduces the water content of the perlite source material by at least 1.0%, at least 1.5%, or at least 2.0% by weight.

7. The method of any one of claims 1 to 6, wherein the milled, expanded perlite has a $d_{50}$ diameter ranging from 20 $\mu$m to 30 $\mu$m, and/or wherein the milled, expanded perlite has a $d_{10}$ diameter ranging from 5 $\mu$m to 20 $\mu$m and $d_{90}$ diameter ranging from 50 $\mu$m to 200 $\mu$m.

8. The method of any one of claims 1 to 7, wherein a recovery of the expanded perlite having a diameter greater than or equal to 5 $\mu$m relative to the perlite source material is at least 80%, or wherein a recovery of the expanded perlite having a diameter greater than or equal to 5 $\mu$m relative to the perlite source material is at least 95%.


**Patentansprüche**

1. Verfahren zur Herstellung einer Filterhilfe, umfassend:

   Erhitzen eines Perlit-Ausgangsmaterials bei einer ersten Temperatur von weniger als oder gleich 500 °C für einen Zeitraum, der von 10 Minuten bis 1 Stunde reicht, um dehydrierten Perlit mit einem Wassergehalt, der von 1,0 Gew.-% bis 4,5 Gew.-% reicht, zu erzeugen, wobei der Wassergehalt durch Messen des Glühverlustwerts (LOI) bestimmt wird, der sich auf die Gewichtsdifferenz einer Probe vor und nach Erhitzen bei einer Temperatur von 1000 °C in einem Hochtemperaturofen für einen Zeitraum von 1 Stunde bezieht, um die flüchtigen Komponenten zu entfernen, wobei der LOI dann als Gewichtsprozent berechnet wird und der Menge an internem Wasser entspricht, die ursprünglich in der Probe vorhanden war;
   Erhitzen des dehydrierten Perlits bei einer zweiten Temperatur von mehr als 750 °C, um expandierten Perlit zu erzeugen; und
   Mahlen des expandierten Perlits;
   wobei der gemahlene, expandierte Perlit einen $d_{50}$-Durchmesser, der von 5 $\mu$m bis 50 $\mu$m reicht, aufweist.

2. Verfahren nach Anspruch 1, wobei die erste Temperatur von 300 °C bis 500 °C reicht.

3. Verfahren nach Anspruch 1 oder 2, wobei der expandierte Perlit vor dem Mahlen einen $d_{10}$-Durchmesser von weniger als 20 $\mu$m aufweist.

4. Verfahren nach einem der Ansprüche 1 bis 3, wobei der gemahlene, expandierte Perlit eine Schüttdichte von mehr als 48,1 kg/m$^3$ (3,0 lb/ft$^3$) aufweist.

5. Verfahren nach einem der Ansprüche 1 bis 4, wobei der Wassergehalt des Perlit-Ausgangsmaterials mehr als 3,5 Gew.-% ist und der Wassergehalt des dehydrierten Perlits von 1,0 Gew.-% bis 3,5 Gew.-% reicht.

6. Verfahren nach einem der Ansprüche 1 bis 5, wobei das Erhitzen bei der ersten Temperatur den Wassergehalt des Perlit-Ausgangsmaterials um mindestens 20 %, mindestens 30 % oder mindestens 50 % relativ zu dem Wassergehalt vor dem Erhitzen reduziert, oder wobei das Erhitzen bei der ersten Temperatur den Wassergehalt des Perlit-Ausgangsmaterials um mindestens 1,0 Gew.-%, mindestens 1,5 Gew.-% oder mindestens 2,0 Gew.-% reduziert.

7. Verfahren nach einem der Ansprüche 1 bis 6, wobei der gemahlene, expandierte Perlit einen $d_{50}$-Durchmesser, der von 20 $\mu$m bis 30 $\mu$m reicht, aufweist und/oder wobei der gemahlene, expandierte Perlit einen $d_{10}$-Durchmesser, der von 5 $\mu$m bis 20 $\mu$m reicht, und einen $d_{90}$-Durchmesser, der von 50 $\mu$m bis 200 $\mu$m reicht, aufweist.

8. Verfahren nach einem der Ansprüche 1 bis 7, wobei eine Rückgewinnung des expandierten Perlits mit einem Durchmesser von größer als oder gleich 5 $\mu$m bezogen auf das Perlit-Ausgangsmaterial mindestens 80 % ist, oder wobei eine Rückgewinnung des expandierten Perlits mit einem Durchmesser von größer als oder gleich 5 $\mu$m bezogen auf das Perlit-Ausgangsmaterial mindestens 95 % ist.

**Revendications**

1. Procédé de préparation d'un adjuvant de filtration, comprenant :

le chauffage d'un matériau source à base de perlite à une première température inférieure ou égale à 500 °C pendant une durée variant de 10 minutes à 1 heure pour produire de la perlite déshydratée ayant une teneur en eau variant de 1,0 % à 4,5 % en poids, dans lequel la teneur en eau est déterminée en mesurant la valeur de la perte par ignition (LOI), qui correspond à la différence de poids d'un échantillon avant et après chauffage à une température de 1 000 °C dans un four à haute température pendant 1 heure pour éliminer les composants volatils, la LOI est ensuite calculée en pourcentage en poids et correspond à la quantité d'eau interne initialement présente dans l'échantillon ;
le chauffage de la perlite déshydratée à une seconde température supérieure à 750 °C pour produire de la perlite expansée ; et
le broyage de la perlite expansée ;
dans lequel la perlite broyée et expansée a un diamètre $d_{50}$ variant de 5 $\mu$m à 50 $\mu$m.

2. Procédé selon la revendication 1, dans lequel la première température varie de 300 °C à 500 °C.

3. Procédé selon la revendication 1 ou 2, dans lequel, avant broyage, la perlite expansée a un diamètre $d_{10}$ inférieur à 20 $\mu$m.

4. Procédé selon l'une quelconque des revendications 1 à 3, dans lequel la perlite broyée et expansée a une densité lâche supérieure à 48,1 kg/m$^3$ (3,0 lb/pi$^3$).

5. Procédé selon l'une quelconque des revendications 1 à 4, dans lequel la teneur en eau du matériau source à base de perlite est supérieure à 3,5 % en poids, et la teneur en eau de la perlite déshydratée varie de 1,0 % à 3,5 % en poids.

6. Procédé selon l'une quelconque des revendications 1 à 5, dans lequel le chauffage à la première température réduit la teneur en eau du matériau source à base de perlite d'au moins 20 %, d'au moins 30 % ou d'au moins 50 % par rapport à la teneur en eau avant chauffage, ou dans lequel le chauffage à la première température réduit la teneur en eau du matériau source à base de perlite d'au moins 1,0 %, d'au moins 1,5 % ou d'au moins 2,0 % en poids.

7. Procédé selon l'une quelconque des revendications 1 à 6, dans lequel la perlite broyée et expansée a un diamètre $d_{50}$ variant de 20 $\mu$m à 30 $\mu$m, et/ou dans lequel la perlite broyée et expansée a un diamètre $d_{10}$ variant de 5 $\mu$m à 20 $\mu$m et un diamètre $d_{90}$ variant de 50 $\mu$m à 200 $\mu$m.

8. Procédé selon l'une quelconque des revendications 1 à 7, dans lequel une récupération de la perlite expansée ayant un diamètre supérieur ou égal à 5 $\mu$m par rapport au matériau source à base de perlite est d'au moins 80 %, ou dans lequel une récupération de la perlite expansée ayant un diamètre supérieur ou égal à 5 $\mu$m par rapport au matériau source à base de perlite est d'au moins 95 %.

**FIG. 1**

**FIG. 2**

**FIG. 3**

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62552870 W
- EP 0790070 A1
- CH 472234 A
- WO 2015100050 A1
- US 2501962 A